# EUROPEAN PATENT APPLICATION

(11) **EP 2 897 089 A1**
(43) Date of publication of application: **22.07.2015**
(21) Application number: 14151722.7
(22) Date of filing: 20.01.2014
(51) Int. Cl.: G06Q 10/06, G06Q 10/08, G07C 9/00

(54) **A garment dispenser assembly**

(71) Applicant: ABS Belgium NV, 2380 Ravels (BE)
(72) Inventor: de Boer, Anne, 2380 Ravels (BE)
(74) Representative: Plas, Axel Ivo Michel

(57) **Abstract**

A garment dispenser assembly (1) is disclosed comprising an inventory module (70) configured to adjust the garment container inventory (72, 74) in function of garment identifiers (22) detected by the garment detector (32) of the person interface (30) and container identifiers (16) determined by the container determinator (52) of the cleaning interface (50); and adjust the personal garment inventory (76) in function of garment identifiers (22) detected by the garment detector (32) of the person interface (30).

## Description

### Field of the Invention

The present invention generally relates to a garment dispenser assembly, comprising a garment dispenser configured to dispense garments comprising a wireless tag with a garment identifier identifying each garment.

### Background of the Invention

Garment dispensers are in operation in enterprises in which tasks are performed by person which require a particular type of garment for suitable protection of this person, for example by protection against fire hazards or chemicals in a chemical plant, or in order to attain a suitable hygiene level in a task area for example in a food processing industry or health facilities. Garments for these person are involved in a cycle in which they are collected by the person from the unattended garment dispenser, subsequently the person performs a task while wearing these garments and returns the garments after use, upon which the returned garments are forwarded to a cleaning facility, for example at an off-site washing facility, after which the cleaned garments return to the garment dispenser in order to be available again for collection by a person, preferably after the properties of the cleaned garments have been checked for their suitability of use by that person.

In order to automate the distribution of the garments to the persons at the garment dispenser, the garments are provided with a wireless tag, such as an Radio Frequency Identification or RFID tag, which comprises a garment identifier for automatically identifying each garment. These wireless tags then suitably cooperate with a corresponding garment detector that is able to automatically detect the garment identifier of the garments. In prior art systems a user often identifies himself to the garment dispenser after which the garment dispenser dispenses a suitable garment by means of an automated conveyor such as for example known from WO2006032972. Such automated dispensing mechanisms limit the throughput that is attainable by the garment dispenser and require all garments to be stored and arranged in an individual fashion, which increases storage space. Additionally such automated dispensing mechanisms comprise a complex construction requiring a substantial investment for their installation and require highly skilled, dedicated and quick response maintenance teams to be available to resolve any issues with the hardware of the automated dispensing mechanism. The same holds for garment dispensers that make use of individualised storage compartments for each person, such as for example known from US5313393. When the cleaning facility handles the garments in bulk, this also requires an additional sorting operation after the cleaning operation in order to make the garments for example fit for storage on an automated conveyor or for distribution in individualised storage compartments for each person.

An automatic towel dispenser is known from US8362878 in which towels can be retrieved from rack comprising clean towels and returned to a dirty towel container. Each towel can be identified by means of an RFID. A user is identified before he retrieves clean towels. The clean towels retrieved by this user are detected by detecting all RFID tags of the towels in the clean towel compartment before the retrieval operation and after the retrieval operation, the then missing RFID tags being added to the personal towel inventory of that identified user. Similarly when a user returns one or more towels to the dirty towel container, the specific towels returned are identified by detecting all RFID tags in the dirty towel container before and after the return operation, the then added RFID tags being removed from personal towel inventory of the corresponding user. This system allows for an increased throughput when interfacing with the person as no dispensing mechanisms are needed and also when interfacing with the cleaning facility as the towels can be exchanged in bulk in suitable containers without requiring sorting operations. However as all RFID tags need to be scanned on the clean tower rack, the cabinet housing this rack needs to be fitted with a powerful and sophisticated detector system that is able to reliably scan all RFID tags inside the cabinet. It is clear that this also places limits on the maximum dimensions of such a cabinet. Scanning all these tags reliably also requires sufficient time for detection and processing of the information by the detector. The same holds for the cabinet holding the dirty towel container. Furthermore it is essential that both cabinets comprising this powerful and sophisticated RFID detectors are constructed in such a way that their detectors are not able to detect tags of towels in the other cabinet.

The automatic towel dispenser of US8362878 also comprises a personal towel inventory tracking capability such that it can for example compile a list of towels that have not been returned within a predetermined time limit and for example issue a suitable warning signal. This does not allow to discriminate between unreturned towels that have been used, have not been used or were not replaced because no clean towels were available. Even more complex garment tracking systems are available, such as for example known from US20110001602, however these systems are directed at warning or preventing a person from performing a task when not wearing suitable protective garments, such as also known from US6853303. However these systems rely on fixed procedures for the return flow of dirty garments, in which garments need to be returned to by the person according to a fixed pattern, for example daily or weekly upon which a cleaning operation is performed. This leads to inefficiencies, the return flow of dirty garments will comprise a certain amount of garments that are still sufficiently clean for further use, leading to increased energy usage, use of storage space, transportation needs, etc. during the cleaning operation. Additionally such an automated dispenser requires a comparatively complex construction comprising a relatively high number of moving components, motors, sensors, dedicated control systems, etc. which lead to high installation and maintenance costs as service needs to be provided by dedicated technicians that must be available at any moment when the automated dispenser is in operation.

Thus there still exists a need for a garment dispenser assembly with an increased throughput, simple setup and increased efficiency with regard to the dispensing and cleaning of the garments.

### Summary of the Invention

According to a first aspect of the invention there is provided a garment dispenser assembly (1), comprising:
- at least one garment dispenser configured to dispense garments comprising a wireless tag with a garment identifier identifying each garment, the garment dispenser comprising:
   - at least one garment container, identified by a container identifier, for receiving and/or presenting garments;
   - at least one person interface operable to provide a person identified by a person identifier access to the at least one garment container, and comprising a garment detector configured to detect the garment identifier of the garments exchanged with the at least one garment container by this person;
   - at least one cleaning interface operable to exchange the at least one garment containers with at least one cleaning facility and comprising a container determinator configured to determine the container identifier of the containers exchanged with the cleaning facility;
- an inventory module connected to each garment dispenser, and for each garment dispenser configured to:
   - store a garment inventory comprising:
      - a garment container inventory comprising a correlation between the container identifiers and the garment identifiers of garments present in the respective containers;
      - a personal garment inventory comprising a correlation between the person identifiers and the garment identifiers of garments in the possession of that person;
      - adjust the garment container inventory in function of garment identifiers detected by the garment detector of the person interface and container identifiers determined by the container determinator of the cleaning interface; and
      - adjust the personal garment inventory in function of garment identifiers detected by the garment detector of the person interface.

In this way the garment dispensing assembly allows for simplified as the garment inventory are compiled in function of the information incoming clean garments and outgoing dirty garments from the person interface as detected by its detector and information from the cleaning interface relating to incoming clean garment containers and outgoing dirty garment containers. There is thus no need for sophisticated and powerful detectors and associated longer scanning time periods that are able to detect all wireless tags in the clean garment container or the dirty garment container in order to compile these inventories. This also increases the throughput of the garment dispenser. In this way the garment dispensing assembly allows for an increased efficiency.

According to an embodiment the inventory module further comprises an inventory status controller configured to:
- store a garment status associated with each garment identifier stored in the garment inventory;
- determine said garment status in function of garment identifiers detected by the garment detector of the person interface and/or container identifiers detected by the container determinator of the cleaning interface.

In this way the garment dispensing assembly allows for an increased efficiency, especially for organising the return flow of the dirty garments as the garment status is available in the personal garment inventory which for example allows for the prevention of the return of still sufficiently clean garments, thus increasing energy usage, transportation needs, storage volume, etc. associated therewith. It also allows for a safe and secure dispensing of the garments to the user such that the hygienic or safety requirements can be met without requiring complex means for dispensing the garments.

According to a further embodiment the garment dispenser assembly further comprises at least one cleaning module, connected to the inventory module, and comprising a garment cleaning inventory comprising the garment identifiers of garments present in the respective cleaning facility for being subjected to a cleaning operation affecting the garment status; and in that the inventory status controller is further configured to determine the garment status in function of the cleaning operation to which the respective garment identified by the garment identifier is subjected at the cleaning facility and store the garment status in the garment inventory.

In this way it can be assured that the effect of the cleaning operation on the garment is reliably tracked. Such that the dispenser only offers garments to users that have been subjected to the correct cleaning operation or that for example the number of cleaning operations, affecting the garment properties, can be tracked and taken into account when dispensing the garments to users for performing certain tasks.

According to still a further embodiment:
- the garment dispenser assembly further comprises at least one task interface operable to provide a person identified by the person identifier access to a task area for performing a task affecting the garment status of the garments worn by that person, and comprising a garment detector configured to detect the garment identifiers of the garments worn by that person,
- the inventory module is further connected to the at least one task interface, and
- the inventory status controller is further configured to determine the garment status for each garment identifier detected by the garment detector of the task interface in function of the task and store the garment status in the garment inventory.

In this way also the effect of the task performed by the person on the garment status can be reliably tracked. Such that the dispenser only allows collection of garments from users that have been sufficiently used during execution of certain tasks or that for example the number and type of tasks, affecting the garment properties, can be tracked and taken into account when, after a cleaning operation, the garments are again dispensed to users for performing certain tasks.

According to a further embodiment the garment dispenser assembly further comprises a user interface connected to the inventory module; the inventory module being further configured to provide instructions through the user interface in function of the garment inventory and the garment status.

This allows for an optimisation of throughput and efficiency, especially of the return flow of dirty garments, as this for example allows to prevent sending a signal to the user for returning garments when they are still sufficiently clean or when no suitable replacement garments are available.

According to a preferred embodiment the inventory module is further configured to provide garment replacement instructions through the user interface to the persons associated in the personal garment inventory with the garments of which the garment status corresponds to a predetermined replaceable garment status and for which a suitable replacement garment is available in the clean container inventory.

This allows for a preferable implementation that prevents sending a signal to the user for returning garments when they are still sufficiently clean, safe, usable,... or when no suitable replacement garments are available.

According to a further embodiment the inventory module is further configured to:
- determine the garments disposed in the at least one garment container by the person by determining the garments of which the garment identifiers are detected by the garment detector of the person interface when the person enters the garment dispenser through the person interface and are no longer present when the person exits it through the person interface;
- add these garment identifiers to the respective garment container inventory;
- remove these garment identifiers from the personal garment inventory of that person.

Additionally the inventory module can be further configured to:
- determine the garments taken from the at least one garment container by the person by determining the garments of which the garment identifiers are detected by the garment detector of the person interface when the person exits the garment dispenser through the person interface and were not yet present when the person entered it through the person interface;
- remove these garment identifiers from the respective garment container inventory;
- add these garment identifiers to the personal garment inventory of that person.

This allows for a further increase of the throughput and simplification of the setup of the garment dispenser as only a detection of garments entering and exiting through the person interface is required for adjusting the garment inventory which can be performed quickly and with a simple detector as the maximum number of garments involved is normally far more limited than the maximum number of garments accumulated in the garment containers. Furthermore there is no longer a risk of erroneous detection of garment identifiers in adjacent containers by the respective detectors and thus no longer a need for a suitable cabinet to prevent this.

According to still a further embodiment the inventory module is further configured to provide garment replacement instructions through the user interface to the persons associated in the personal garment inventory with the garments of which the garment status corresponds to a predetermined replaceable garment status and for which a replacement is available in the garment container inventory.

Preferably the person interface comprises a controllable gate configured to control access to the garment dispenser under control of the inventory module; and the inventory module is further configured to control the controllable gate of the person interface such that it only allows access to the garment dispenser if the garment status of the garments detected by the garment detector of the person interface corresponds to a predetermined replaceable garment status and a replacement is available in the garment container inventory.

Optionally the task interface comprises a controllable gate configured to control access to the access to the task area under control of the inventory module; and the inventory module is further configured to control the controllable gate of the task interface such that it prevents access to the task area if the garment status of the garments detected by the garment detector of the task interface corresponds to a predetermined unallowed garment status.

Optionally the inventory module is configured to determine the predetermined replaceable garment status in function of the predetermined unallowed garment status.

Optionally the inventory module is further configured to determine the predetermined replaceable garment status in function of the garment container inventory.

This prevents the return of sufficiently clean garments thus reducing energy consumption, transportation needs, storage volume, etc. during the cleaning operation and visits from persons to the garment dispenser when no suitable replacement garment is available. This is realised without compromising safety, for example by ascertaining protection of the wearer of the garment against a hazards from the environment such as for example an operator in a chemical plant or by ascertaining protection of a product or environment from contamination by the wearer of the garment, for example when guaranteeing hygienic standards in an assembly line for processing food items or in a pharmaceutical production line.

According to a second aspect of the invention there is provided a method of operating a garment dispenser assembly according to the first aspect of the invention, characterised in that the method comprises the inventory module performing the steps of:
- storing a garment inventory comprising:
   - a garment container inventory comprising a correlation between the container identifiers and the garment identifiers of garments present in the respective containers;
   - a personal garment inventory comprising a correlation between the person identifiers and the garment identifiers of garments in the possession of that person;
- adjusting the garment container inventory in function of garment identifiers detected by the garment detector of the person interface and container identifiers determined by the container determinator of the cleaning interface; and
- adjusting the personal garment inventory in function of garment identifiers detected by the garment detector of the person interface.

### Brief Description of the Drawings

Fig. 1 schematically illustrates an embodiment of the garment dispenser assembly according to the invention; and
Fig. 2 illustrates an alternative embodiment of the garment dispenser assembly of Figure 1;
Fig. 3 and 4 schematically illustrates a method of operating a the garment dispenser assembly of Figure 1;
Fig. 5 schematically illustrates a screen shot of a user interface of the garment dispenser assembly of Fig. 1; and
Fig 6. schematically illustrates a data processing system for executing the method of operating the garment dispenser assembly

### Detailed Description of Embodiment(s)

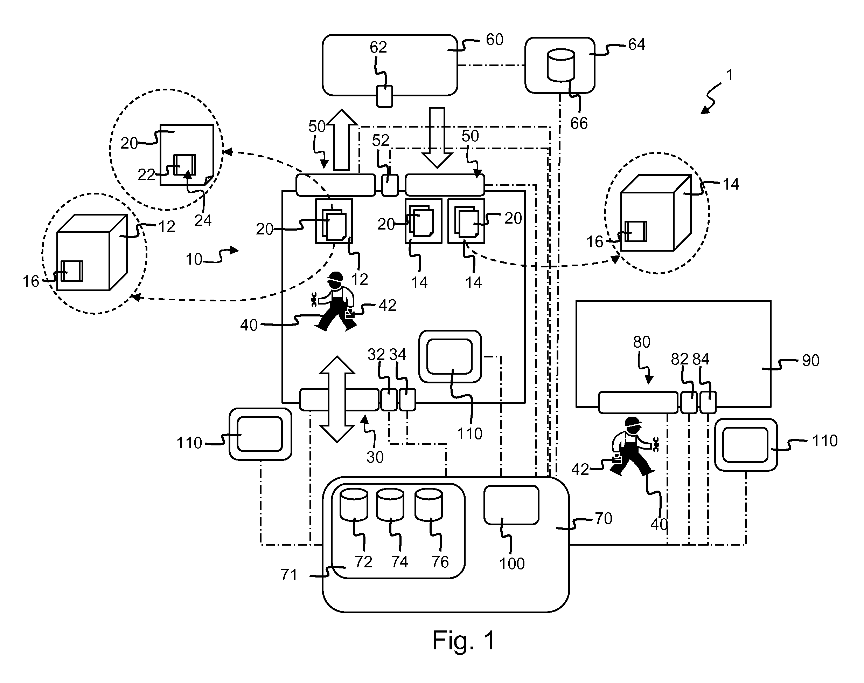

Figure 1 schematically shows an embodiment of the garment dispenser assembly 1 according to the invention. It comprises a garment dispenser 10 configured to dispense garments 20 to persons 40, for example suitable protective garments 20 for workers 40 that need to perform a certain task in a task area 90 comprising a manufacturing line of a manufacturing or food processing plant, or work related garments for medical personnel performing certain tasks in a task area 90 where specific hygienic requirements are applicable. As shown each garment 20 handled by the garment dispenser 10 comprises a wireless tag 24, such as for example an RFID tag that is suitably attached to these garments, for example by integrating it into a label that is attached to the garment 20. It is clear that other wirelessly detectable tags, such as other tags suitably detectable by means of a radio frequency signal are possible. Radio frequency based tags are preferred as they are not easily affected by operations that render the garment dirty, however according to still further embodiments even other wirelessly detectable tags, such as for example tags comprising a code such as a bar code, QR code, etc. that is optically detectable for example by means of a suitable optical scanner or a camera can be used. It generally suffices that the wirelessly detectable tag is able to provide a garment identifier 22 identifying each garment 20.

As further shown in Figure 1, the garment dispenser 10 comprises a dirty garment container 12 for receiving dirty garments and two clean garment containers 14 for presenting clean garments. It is clear that any other suitable number of these garment containers is possible, as long as at least one garment container 12 is present. Such garment containers 12, 14 could be any suitable container that is able to hold a plurality of garments in bulk, for example a suitable box, bin, vessel, case, cart, rack, etc. Preferably the clean garment container 14 presents the cleaned garments 20 in an orderly fashion, for example stacked and/or folded, so that a person retrieving such a clean garment from the garment dispenser 10 can easily identify and retrieve the desired garment 20. The dirty garment container 12 could be a container in which dirty garments can be assembled from a person 40 at the garment dispenser in an disorderly fashion as generally the dirty garments are handled in bulk during at a subsequent cleaning facility 60 such as an industrial laundry service.

The garment dispenser 10 of Figure 1 is depicted as a room or enclosed area which a user 40 can enter and exit through a person interface 30, such as for example a door, gateway, carousel, etc. The person interface 30 in this way provides a person 40 access to the dirty garment container 12 and the clean garment container 14. This person is identified by a person identifier 42, such as for example an electronic security badge 42 of a worker 40 that is detectable by a suitable associated person detector 34 connected to an inventory module 70, however according to alternative embodiments the person identifier 42 could be a unique user name or a worker identification code, etc. with which the person can identify himself at a suitable identification terminal. Additionally the person interface 30 comprises a garment detector 32 for detecting the garment identifier 22 of the garments 20. As shown this could be a suitable garment detector 32 arranged near the door forming the person interface, such that the garment identifiers 22 of the garments 20 of a person 40 can be detected when that person 40 enters and exits the garment dispenser 10 through the person interface. This could for example be a suitable RFID detector for detecting the garment identifier 22 present in the RFID tags 24 of the garments 20 when passing through this person interface 30. It is clear that according to alternative embodiments any other suitable garment detector 32 for detecting the garment identifier 22 from the wireless tags 24 being used in the garments 20 is possible. As shown also this garment detector 32 is connected to the inventory module 70. The garment detector 32 allows to detect which garments 20 are the dirty garment container 12 and/or taken from the of clean garment container 14 by the person 40. This is possible as such a garment detector 32 allows to detect the garment identifiers 22 of the garments 20 when the person 40 enters the garment dispenser 10. Additionally the detector 32 allows to detect the garment identifiers 22 of the garments 20 when the person 40 exits the garment dispenser 10. It is clear that the person 40 can be automatically identified by means of its person identifier 42, for example automatically detected by the person detector 34 when passing through the person interface 30. In order to allow a secure and swift detection preferably the RFID tags 24 are preferably a UHF RFID tag, for example an EPCglobal UHF Class 1 generation 2 Generation 2 compliant RFID tag. The corresponding RFID detectors of such UHF RFID tags 24 that can be used as garment detectors 32 at the person interface 30 have a detection range of over 1 metres which is sufficiently large to cover the area of a person interface 30 such as a door or a gate for a reliable and swift detection of all garments a person is exchanging through the person interface. Such UHF RFID tags operate normally in a frequency range of 865-868 MHz in Europe and 902-928 MHz in North America.

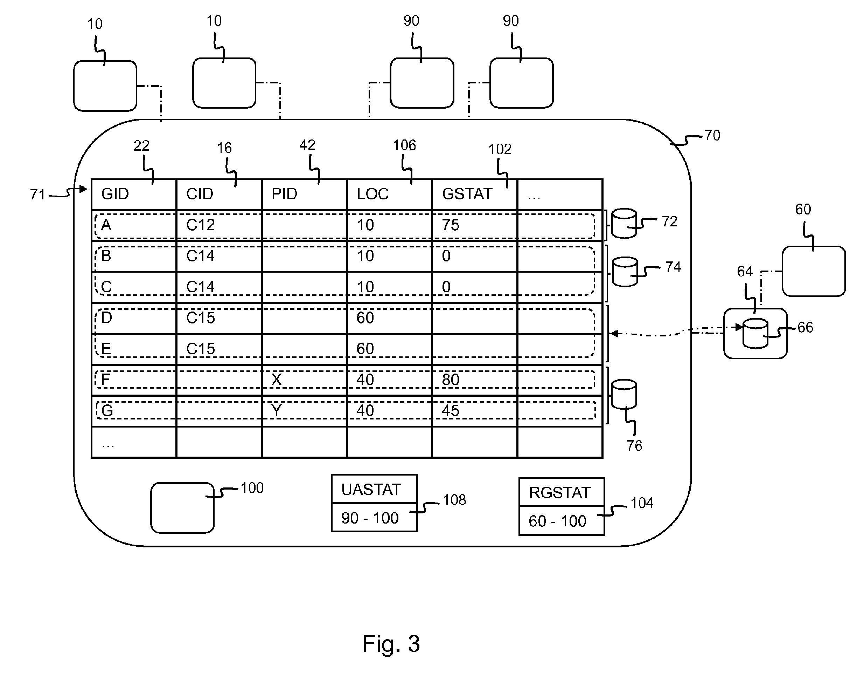

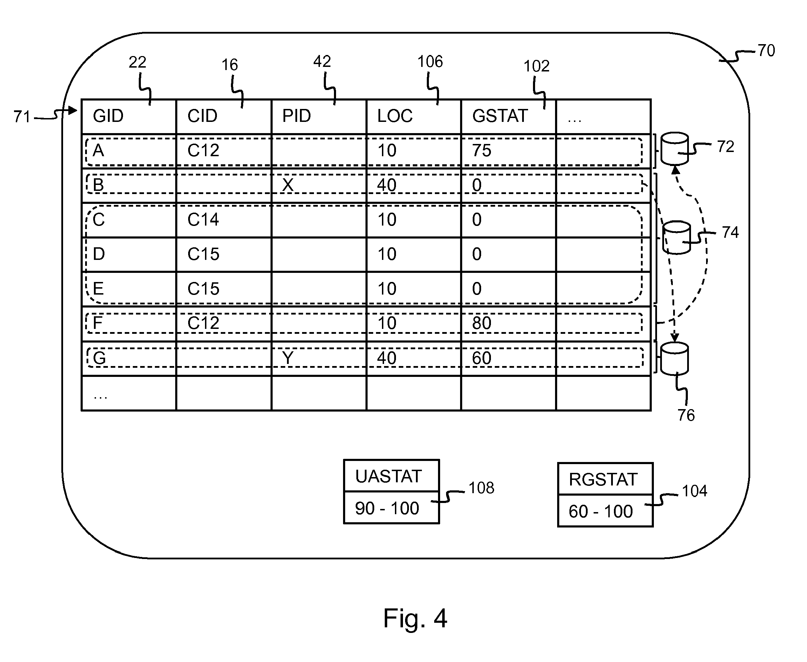

This allows to detect the garments 20 disposed in the dirty garment container 12 by that person 40 by detecting the garments 20 of which the garment identifiers 22 are detected when that person enters the garment dispenser 10 through the person interface 30 and are no longer present when the person exits it through the person interface 30. The garments 20 taken from the clean garment container 14 by that person 40 can similarly be detected by detecting the garments 20 of which the garment identifiers 22 are detected when the person 40 exits the garment dispenser 10 through the person interface 30 and were not yet present when the person 40 entered it through the person interface 30. The inventory module 70 suitably connected to the person interface 30, receiving this information from for example the garment detector 32 and person detector 34 can in this way keep track of the garment inventory 71 of each of the persons 40, as well as that of the garment inventory 71 of the garment dispenser 10 as it is able to concurrently keep track of the garments added to the dirty garment container 12 and taken from the clean garment container 14. The inventory module 70 comprising for example a suitable computing means, for example embodied as a processor connected to a memory comprising programming instructions that determine the method of operation of the inventory module 70. The inventory module 70 of the garment dispenser 10 in this way is able to store and keep track of a garment inventory 71 comprising a dirty garment container inventory 72, a clean garment container inventory 74 and a personal garment inventory 76. The dirty garment container inventory 72 being a suitable storage structure in the memory of the inventory module 70 comprising the garment identifiers 22 present in the dirty garment containers 12. The clean garment container inventory 74 comprising the garment identifiers present in the clean garment containers 14. The inventory module 70 being programmed to adjust the garment container inventory, such as the dirty garment container inventory 72 and clean garment container inventory 74 in function of information received from the person interface 30 as explained above. Such a garment container inventory 72, 74 comprises a correlation between the container identifiers 16 and garment identifiers 22 of garments 20 present in the respective containers as will explained in further detail with reference to Figures 3 and 4. Concurrently the information received from the person interface 30 allows the inventory module 70 to store a personal garment inventory 76 comprising a correlation between the person identifiers 42 and the garment identifiers 22 of garments in the possession of that person 40. This means an aggregation of the garment identifiers 22 of the garments 20 that were detected when the person exits the garment dispenser and which were not yet detected as garments 20 that were disposed in the dirty garment container 12. The inventory module 70 thus adjusts the personal garment inventory 76 in function of information from the person interface 30, especially the garment identifiers 22 of garments 20 being disposed in the dirty garment container 12 and taken from the clean garment container 14 as for example determined by the garment detector 32 for each identified person 40. For example during a first visit to the garment dispenser 10 it is detected that person A collects garments X and Y from the clean garment container 14, of which the garment identifiers are added the personal garment inventory 76 of person A. During a second visit of person A to the garment dispenser 10 it is detected that this person has collected a further garment Z from the clean garment container 14, the garment identifier 22 of this garment Z then also being aggregated in the personal garment inventory 76 of person A. However during this second visit it is also established by the inventory module 70 that person A has dispensed garment Y in the dirty garment container 12, the identifier of this garment Y then being deleted from the personal garment inventory 76 of person A. The inventory module 70 could make these assertions from the information provided by the person interface 30 received during the first and second visit to the garment dispenser, more specifically garment identifiers 22 detected by the garment detector 32 and the person identifier 42 detected by the person detector 34. This means that the person detector 34 will for example detect the identity of person A by detecting its person identifier 42 when that person passes through the person interface 30 of the garment dispenser. Additionally the garment detector 32 will for example during the second visit of the person described above detect the garment identifiers 22 of garments X and Y when person A enters the garment dispenser 10 through the person interface 30 and the garment identifiers 22 of garments X and Z when person A exits the garment dispenser through the person interface 30. As garment Y is present at entry and missing at exit of person A, the inventory module 70 is able to determine that garment Y was put in the dirty garment container 12 by person A and is thus no longer in the possession of person A. This then allows the inventory module 70 to adjust the dirty garment inventory 72 of the garment dispenser 10 and the personal garment inventory 76 of person A accordingly. As garment Z is present at exit, but was not yet present at entry of person A, the inventory module 70 is able to determine that garment Z was taken from a clean garment container 14 by person A and is from that moment in the possession of person A. This then allows the inventory module 70 to adjust the clean garment inventory 74 of the garment dispenser 10 and the personal garment inventory 76 of person A accordingly. Garment X is present both at entry and exit of person A, upon which the inventory module 70 assesses this garment remains in the possession of person A and thus no changes are needed with respect to garment X in the personal garment inventory 76 of person A, nor in the dirty garment inventory 72 or the clean garment inventory 74 of the garment dispenser 10.

As further shown in Figure 1, the garment dispenser 10 further comprises a cleaning interface 50 operable to exchange the clean garment containers 12 and dirty garment containers 14 with a cleaning facility 60. This cleaning interface 50 could for example be a suitable gate, door, gateway, carousel, etc. through which the clean garment containers 12 and dirty garment containers 14 can enter and exit the garment dispenser 10. When sufficient dirty garments 20 have been collected in the dirty garment containers 12, these dirty garment containers 12 can be removed from the garment dispenser 10 through the cleaning interface 50 and be subsequently transported to a cleaning facility 60 such as an on-site or remote industrial washing facility, a sanitizing device, etc.. When cleaned at the cleaning facility 60 the cleaned garments 20 that were present in the dirty garment containers 12 can be put in clean garment containers 14 and fed back to the garment dispenser 10 through the cleaning interface 50. It is clear that in addition to the garments 20 from the dirty garment container 12 that were subject to a cleaning action at the cleaning facility 60, new garments or cleaned garments from other sources could be provided in the clean garment containers 14 that are provided to the garment dispenser 10. As shown the inventory module 70 is also connected to a container determinator 52 of the cleaning interface 50. This is necessary as the inventory module 70 needs information regarding the removal of dirty garment containers 12 or the addition of clean garment containers 14 to adjust the garment inventory 71 comprising the corresponding dirty garment inventory 72 and clean garment inventory 74. When the dirty garment containers 12 are removed from the garment dispenser 10 the inventory module 70 adjusts the dirty garment inventory 72 accordingly, for example by removing the garment identifiers 22 or adjusting an associated property such as a location property 106 to indicate that the associated garments 20 are no longer present in the garment dispenser 10.

According to a particularly simple setup, when there is only one dirty garment container 12 or when all dirty garment containers 12 are always removed at once through the cleaning interface 50, a simple detection that the dirty garment containers 12 are removed through the cleaning interface 50 by the container determinator 52 can suffice to inform the inventory module 70 that all garment identifiers 22 present in the dirty garment inventory 72 are no longer present in the garment dispenser 10. This can for example be automatically accomplished by means of a suitable garment container detector 52 that cooperates with the cleaning interface 50 and detects whenever the dirty garment containers 12 pass through the exit side of the cleaning interface 50. According to a preferred embodiment the dirty garment containers 12 and the clean garment containers 14 are garment containers provided with a container identifier 16, this container identifier 16 preferably being wirelessly detectable by a suitable container detector 52 of the cleaning interface 50. Preferably the container identifier 16 is an optical identifier such as a bar code or a QR-code or a wireless tag of which the associated container detector 52 will not experience interference of the wireless tags 24 of the garments 20 which are for example RFID tags. Such a setup reduces the scanning and processing time of the container detector 52 as only a single container identifier 16 must be scanned when a container passes through the cleaning interface 50. In such a case, especially when a plurality of dirty garment containers 12 are in use, the inventory module 70 keeps track of the respective container identifier 16 for each garment identifier 22 present in the dirty garment inventory 72 or clean garment inventory 74 by means of a correlation between the container identifiers 16 of the garment identifiers 22 of garments 20 present in the respective garment container. When for example a plurality of dirty garment containers 12 are in use in the garment dispenser 10, detection of which specific dirty garment container 12 the user disposed its garments 20 can be accomplished automatically, if for example each of these dirty garment containers 12 is assigned to a specific type of garment 20, for example a dirty garment container 12 for trousers and a dirty garment container 12 for shirts, or when an indicator or signal is provided to the user by the inventory module 70 to indicate which dirty garments 20 are to be disposed in which specific dirty garment container 12, or any other suitable method that allows detection of the specific dirty garment container 12 in which the user 40 disposed a specific garment 20.

The dirty garment containers 12 exiting the garment dispenser 10 through the cleaning interface 50 are subsequently transported to the cleaning facility 60. The cleaning facility 60 might comprise a suitable detector 62 for the detection of the garment identifiers 22 present in the incoming dirty garment containers 12, so that the cleaning operation can be suitably automated, such as for example by means of an automated selection of a suitable treatment for the specific type of garment 20 associated with the garment identifier 22 or the automatic selection of a suitable cleaning apparatus for handling the amount of dirty garments 20 present in the dirty garment containers 12. Alternatively, in order to reduce the time period for scanning and processing the detector 62 could suitably detect the container identifier 16 of the dirty garment container 12, the associated garment identifiers 22 of the dirty garments 20 could then, as illustrated in Figure 1, be exchanged between the inventory module 70 and a cleaning module 64 suitably connected to the cleaning facility 60 and comprising processing means and memory for storing a cleaning inventory 66. This thus means that the cleaning inventory 66 of the cleaning facility 60 might for example be supplied with the information from the garment inventory 71 of the inventory module 70, which as described above according to such embodiments is able to provide the necessary information about the correlation between specific garment identifiers 22 and specific container identifiers 16 of garment containers 12 in which the respective garments 20 are present.

After the dirty garments 20 were cleaned at the cleaning facility 60 they are put in clean garment containers 14. According to a preferred embodiment the garment identifiers 22 of the cleaned garments 20 are associated with a container identifier 16 of the clean garment container 14 and stored in the cleaning inventory 66, such that when this clean garment container 14 is identified by the container detector 52 associated with the cleaning interface 50 of the garment dispenser 10, this information can be exchanged with the inventory module 70 in order to efficiently update the clean garment inventory 74 of the garment inventory 71. However similarly as explained above with reference to the dirty garment container 12 and associated container detector 52 of the cleaning interface 50 and the detector 62 of the cleaning facility 60 alternative embodiments are possible. It is clear that, when at the cleaning facility the dirty garments 20 that are provided in bulk by means of dirty garment containers 12 during processing, such as for example washing, are kept together in group until they arrive in a clean garment container 14, these garment identifiers 22 can be associated to the clean garment container 14 without the need for an additional detection as they can be retrieved from the cleaning inventory 66 or as the group of garment identifiers 22 that were previously associated with that particular dirty garment container 12. Upon detection of the entry of one or more clean garment containers 14 at the cleaning interface 50 of the garment dispenser 10 the inventory module 70 is able to adapt the clean garment inventory 74 accordingly, by adding the garment identifiers 22 of the garments 20 correlated with the container identifiers 16 of the clean garment containers 14 present in these clean garment containers 14.

As further shown in Figure 1 the inventory module 70 also comprises an inventory status controller 100. This status controller 100 is able to store a garment status 102 associated with each garment identifier 22 stored in the garment inventory 71, as will be explained in more detail with reference to Figures 3 and 4. The status controller 100 determines this garment status 102 in function of garment identifiers 22 detected by the garment detector 32 of the person interface 30 and/or container identifiers 16 detected by the container determinator 52 of the cleaning interface 50. In a particularly simple implementation the garment status 102 could simply aggregate how many times the garment 20 associated with a garment identifier 22 was dispensed by a garment dispenser 10, which could be taken into account when deciding to replace garments. Alternatively in this way the garment status 102 could comprise an aggregation of the number of times the garment 20 was subjected to a cleaning operation, as such a cleaning operation might for example affect certain properties of garments that are used as protective clothing against for example fire hazards.

According to a further embodiment the inventory status controller 100 can also determine the garment status 102 in function of the cleaning operation to which the respective garment 20 identified by the garment identifier 22 is subjected at the cleaning facility 60 and store this garment status 102 in the garment inventory 71. As shown in Figure 1, the cleaning module 64, connected to the inventory module 70, and comprising a garment cleaning inventory 66 comprising the garment identifiers 22 of garments 20 present in the respective cleaning facility 60 for being subjected to a cleaning operation which affects their garment status 102.

As further shown in Figure 1, the garment dispenser assembly 1 further comprises a task area 90 which can be accessed by a person 40 through a task interface 80. Such a task area 90 as explained above is for example a specific room or area where a worker 40 needs to perform a specific task that affects the garment status of the garments worn by that worker. The task interface 80 can for example be a suitable door, gate, etc. Similar as explained above with reference to the person interface 30 of the garment dispenser 10, the task interface 80 could for example also comprise a person detector 84 for automatically detecting the person identifier 42 of the person 40 when passing through the task interface 80. As further shown also a garment detector 82, similar as explained with reference to the garment detector 32 of the person interface 30 of the garment dispenser 10, is associated with the task interface 80. This garment detector 82 is able to detect the garment identifiers 22 of the garments 20 worn by the person 40 passing through the task interface 80. The task interface 80 and its associated detectors 82, 84 are connected to the inventory module 70 comprising the inventory status controller 100. The status controller 100 determines a garment status 102 for each garment identifier 22 detected by the garment detector 82 of the task interface 80. This garment status 102 forms a suitable indicator for example for automatically assessing whether a garment 20 is still sufficiently clean or safe for use in the task area 90 and whether it is already sufficiently dirty or used to be considered for return to the garment dispenser 10. Such a garment status could for example be the aggregated time period that the garment 20 spent in the task area 90, a percentage indicating a cleanliness level, or any other suitable indicator. The inventory status controller 100 of the inventory module 70 stores this garment status 102 in the garment inventory 71, for example in the personal garment inventory 76 of each person 40 accessing the task area 90.

The embodiment of the garment dispenser assembly 1 shown in Figure 1 further comprises a user interface 110 connected to the inventory module 70. This user interface allows the inventory module 70 to provide instructions to the person 40 in function of the garment inventory 71 and the garment status 102. Such a user interface 110 therefor comprises suitable output devices such as a display, audio speaker, etc.. Optionally the user interface 110 could additionally comprise suitable input devices such as a keyboard, touch screen, etc. to receive feedback from the person 40 or to allow the user to make additional requests for further instructions or information. As shown in Figure 1 these user interface could be arranged at the person interface 30 of the garment dispenser 10 and at the task interface 80 of the task area 90, however it is clear that alternative arrangements of such user interfaces 110 are possible. In order to prevent the return of garments that have not been sufficiently used and to prevent the person from retrieving a clean garment 20 when there is no replacement garment 20 available at the garment dispenser 10 the inventory module 70 provides garment replacement instructions through the user interface 110 to the persons 40 associated in the personal garment inventory 76 with the garments 20 of which the garment status 102 corresponds to a predetermined replaceable garment status 104 and for which a replacement is available in the clean garment container inventory 74.

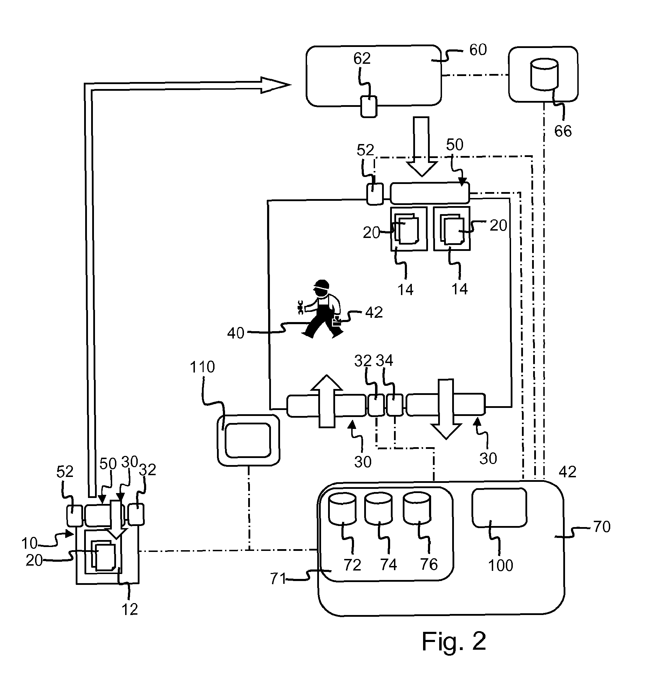

Figure 2, shows an alternative embodiment of the garment dispenser assembly 1 shown in Figure 1. It is generally similar to that of Figure 1 and similar elements are referred to with the same reference signs. As shown the most important difference is that there are now a plurality of garment dispensers 10, one for the clean garment containers 14 and one for the dirty garment containers 12. This could for example be required in order to comply with hygienic standards in which the dirty garments may not be present in the same room as the cleaned garments in order to reduce the risk of contamination. As shown both garment dispensers 10 are suitably connected to the garment inventory module 70 so that the garment inventory 71 can be updated similarly as explained above with reference to Figure 1. Although as shown both garment dispensers are connected to a single central inventory module 70 with a single central garment inventory 71, alternatively each of the garment dispensers 10 could comprise a local part of the inventory module 70 with a local part of the garment inventory 71 that is synchronised with a central part of the garment inventory 71 of a central part of the garment inventory module 70, which is for example suitably connected with its local parts by means of a communication network such as the internet.

Figure 3 illustrates schematically an embodiment of a storage structure in use by the inventory module 70 as the garment inventory 71, which could for example be implemented as a suitable database. The GID column represents the garment identifier 22, the CID column the container identifier 16, the PID column the person identifier 42, the LOC column the location property 106, the GSTAT column the garment status 102 and the RGSTAT value the predetermined replaceable garment status 104. This table for example shows a situation in which a garment 20 with garment identifier A is present in the dirty garment container 12 located in the garment dispenser 10 and with a garment status 102 of 75, which is for example an integer value indicating a percentage of an allowable time period for the garment 20 to be used by the person in the task area 90 or number of operations performed by the person in the task area or any other suitable indicator, where for example a value of 100 indicates immediately replaceable or completely dirty and a value of 0 indicates unused or completely clean. Garments 20 with garment identifiers B and C as indicated in the table are present in the clean garment container 14 located in the garment dispenser 10 and their garment status 102 indicates with a value of 0 that they are still clean. Garments 20 with garment identifiers D and E are being processed at the cleaning facility 60 as indicated in the LOC column and are grouped in a container with container identifier C15. Garment 20 with garment identifier F is in the possession of a person 40 with person identifier X and has a value of 80 for its garment status 102. Garment with garment identifier G is in the possession of a person 40 with person identifier Y and has a garment status 102 with a value of 45. All stored garment identifiers 22, such as garment identifier A, of which the container identifier 16 indicates the garment 20 is present in a dirty garment container C12 in the garment dispenser 10, form the dirty garment inventory 72. The clean garment container inventory 74 can be formed by all stored garment identifiers 22, such as garment identifier B and C, of which the container identifier 16 indicates the garment 20 is present in a clean garment container C14 in the garment dispenser 10. The personal garment inventory 76 can be formed by storing garment identifiers, such as garment identifiers F and G, and their associated correlation with the person identifiers X and Y of the persons 40 currently holding these garments 20 in their possession. The cleaning inventory 66 of the cleaning module is for example based on storage of garment identifiers, such as garment identifiers D and E, of which the location property 106 indicates that they are present at the cleaning facility 60.

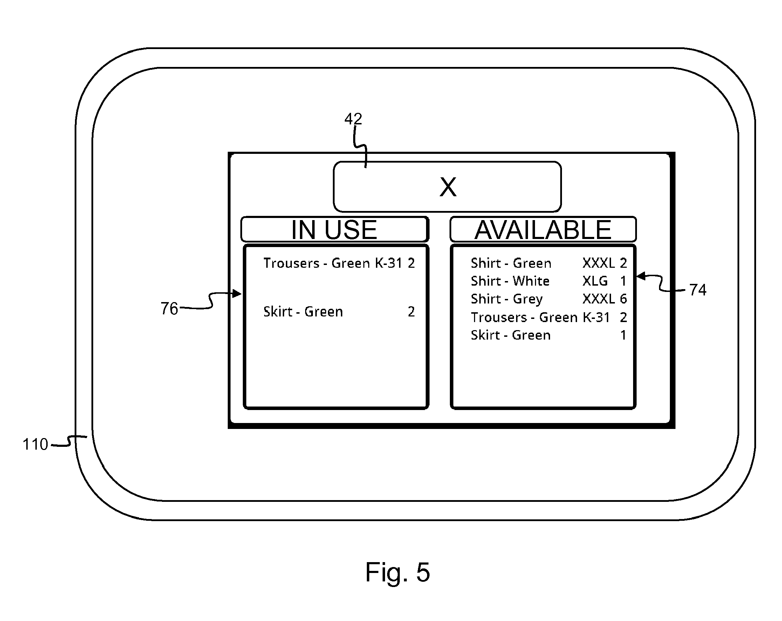

It is clear that, for example in the embodiment shown in Figure 3, the inventory module 70 is able to adjust the personal garment inventory 76 and container inventory 72, 74 of the garment inventory 71, and thus the correlation between the garment identifiers 22 and person identifiers 42 in function of information received from the person interface 30. This means that for example, when person X enters the garment dispenser 10 and the person interface 30 detects garment identifier F at entry of the person, but no longer detects garment identifier F when person X leaves the garment dispenser 10 through the person interface 30, that garment F will be removed from the personal garment inventory 76 correlated to person X and added to the dirty garment container 12 with container identifier C12 and the dirty garment inventory 72, as shown schematically in the table of Figure 4. When for example during this visit to the garment dispenser 10 person X, next to depositing garment F in the dirty garment container 12, also picked up a replacement garment B from the clean garment container with container identifier C14, the person interface 30 will detect garment F at exit of person X and thus be able to update the clean garment container inventory 74 and the personal garment inventory 76 correlated to person X accordingly, as shown in Figure 4. Generally the garment detector 32 is thus able to detect the garments 20 disposed in the dirty garment container 12 by the person by detecting the garments 20 of which the garment identifiers 22 are detected when the person enters the garment dispenser 10 through the person interface 30 and are no longer present when the person exits it through the person interface 30. This information then enables the inventory module 70 to update the dirty garment container inventory 12 accordingly. Additionally, in general, the garment detector 32 is able to detect the garments 20 taken from the clean garment container 14 by the person 40 by detecting the garments 20 of which the garment identifiers 22 are detected when the person 40 exits the garment dispenser 10 through the person interface 30 and were not yet present when the person 40 entered it through the person interface 30. This information then enables the inventory module 70 to update the clean garment inventory 74 accordingly. Therefor it is preferable that the inventory module 70 provides garment replacement instructions through a user interface 110 to the persons 40 in function of the garment status 102 of the garments in his possession. An example a such instructions on the user interface is for example shown in Figure 5, showing a screenshot in which the person is shown in his name or another suitable person identifier 42 for verification. Further there is shown a list of garments in use by that person as a list of types of garments 20 in the personal garment inventory 76 correlated to that person identifier 42 and the count of such garments of that garment type, for example two trousers and two skirts as shown. At the right side there is shown garments 20 which are available in the clean garment container inventory 74 and which are allowed to be collected by the person from the clean garment containers 14 of the garment dispenser 10. Also here the garments are listed by means of an associated garment type and the count of available garments of that type. This list could for example comprise garments of which the garment status 102 indicates they have garment properties suitable for the use by that person.

It is further clear from the embodiment shown in Figures 3 and 4, that the clean garment inventory 74 can be updated in function of information received from the cleaning inventory 66. This is for example the case when the garment container with container identifier C15, which after being processed at the cleaning facility 60, is transported back to the garment dispenser 10 for further use of the cleaned clothes. When for example the container identifier C15 is detected by the garment container detector 52 of the cleaning interface 50 at entry of the garment dispenser 10, as shown in Figures 3 and 4, the garment identifiers D and F associated with this container identifier are added to the clean garment inventory 74 by the inventory module 70. In this embodiment, at that moment also the location property 106 is adjusted to indicate that these garments are present at the garment dispenser 10 and the garment status is set to a value of 0 to indicate that these garments 20 have been processed at the cleaning facility 60. In case of the removal of a dirty garment container 12 from the garment dispenser 10 through the cleaning interface 50, this process could be handled in reverse, which means that, for example upon detection of the container identifier 16 of the dirty garment container 12 by the garment container detector 52 of the cleaning interface 50, the garment identifiers 22 associated with this container identifier 16 could be removed from the dirty garment inventory 72 and added to the cleaning inventory 66, additionally the location property 106 could also be adjusted in order to indicate these garments 20 are no longer present in the garment dispenser 10.

As further shown in Figure 3, the inventory module 70 further comprises a predetermined replaceable garment status 104. As shown according to this embodiment the replaceable garment status 104 comprises a range of values, in this case values from 60 up to 100. In order to reduce for example the energy consumption at the cleaning facility 60 and associated transportation needs from the garment dispenser 10 to the cleaning facility, etc. it is preferred to prevent users from returning garments 20 that are still useable in the task area 90 before a cleaning operation becomes necessary. This means that the garments 20 correlated to a specific person 40 in the personal garment inventory 76 which have a garment status 102 that corresponds to a predetermined replaceable garment status 104, for example when the garment status 102 lies within the range of values of 60-100 as shown in Figure 3, are allowed to return to the garment dispenser 10 for disposal in a dirty garment container 12, but garments 20 with a garment status that lies outside this range are not allowed to be returned for disposal. It is sometimes difficult to assess for the person 40 whether the garment 20 is ready for replacement and whether a suitable replacement garment is available at the garment dispenser 10, which could lead to the user 40 presenting himself at the garment dispenser 10 with a replaceable garment when no suitable garment is available in the clean garment container 14. Advantageously the user is only presented with instructions on the user interface 110 for replacing a garment when additionally the inventory module 70 establishes that a replacement is available in the clean garment container inventory 74. As shown in the embodiment of Figure 1, it is preferable, in addition to arranging one or more user interfaces 110 at the location of the garment dispenser 10, for example at the person interface 30, to arrange also a user interface 110 at the location of the task area 90, for example at the task interface 80. In this way, when the person 40 passes the task interface 80, for example before or after execution of a task in the task area 90, the user can be instructed clearly about the necessity or ability to go to the garment dispenser 10 for replacing garments 20 detected by the task interface 80 in function of the garment status 102 and the clean garment inventory 74. This increases efficiency of the garment replacement process as the person does not need to displace himself to the garment dispenser 10 unnecessary, for example when the garment status 102 does not yet correspond to a predetermined replaceable garment status 104 or when no suitable replacement garment is available in the clean garment container inventory 74. Additionally, this increases the overall throughput of the garment dispensing assembly 1 as only persons 40 of which at least one garment 20 has a garment status 102 that corresponds to a predetermined replaceable garment status 104 and for which a replacement is available in the clean garment container inventory 74 will make use of the garment dispenser 10, unhindered by other persons 40.

When a person accesses the task interface 80 of the task area 90, the garment identifiers 22 of the garments 20 detected the garment detector 82 are sent to the inventory status controller 100 for adapting the garment status 102 of these garments 20. According to one example the inventory status controller 100 determines the garment status 102 for a garment identifier 22 detected by the garment detector 82 of the task interface 80 when a person 40 enters the task area 90 by retrieving the current value of the garment status 102 associated with this garment identifier 22 from the personal garment inventory 76 of that person 40, calculating an updated value for the garment status 102 by incrementing this current value by means of a predetermined amount and storing this updated value in the personal garment inventory 76 of that person 40. For example, when person Y with garment G in its personal garment inventory 76 as shown in Figures 3 and 4, accesses the task area 90 through the task interface 80, upon detection of the garment identifier 22 of garment G, the inventory status controller 100 will retrieve the current value of "45" as shown in Figure 3, calculate an update value, for example by incrementing it with "15" each time the person accesses the task area 90, and store the updated value for the garment status 102 of "60" in the personal garment inventory 76 of person Y as shown in Figure 4. It is clear that other suitable calculations of the garment status 102 of the detected garment identifier 22 are possible. Instead of incrementing a numeric value, decrementing a numeric value could also be possible; or instead of numeric values the garment status 102 could comprise as possible values a discrete number of status identifiers which are calculated by the inventory status controller 100, such as for example "Clean", "Replaceable", "Dirty"; or any other suitable calculated symbol could be used to store the garment status 102 of the detected garment identifier 22. According to the example described above in which the garment status 102 comprises a numeric value which is calculated by increment by the inventory status controller 100 upon detection of the garment identifier 22 at entry of a person through the task interface 80, there are available several examples in which this increment is adapted in function of additional information made available to the inventory status controller 100. For example this increment could be calculated in function of the time spent by the person 40 in the task area 90, for example by providing the inventory status controller 100 in addition to the garment identifier 22 also the time when it was detected at entry and exit of the task interface 80. According to still a further alternative, the increment could be calculated in function of the specific task planned for that person in the task area 90, for example as determined from the work schedule, specific function, etc. associated with the person identifier 42. According to still further alternatives it is clear that the increment could be calculated in function of specific garment properties associated with that garment identifier 22, for example an indicator for the quality, safety level, etc. of the fabric or in indicator for the type of garment from which the type of activity performed by the person can be derived, for example an indicator from which can be determined that the garment 20 is protective clothing to be worn during a welding operation or during the performance of a painting job. It is clear that other suitable information could be provided to the inventory status controller 100 by for example the inventory module 70 or the garment detector 82 in order to adapt the calculation of the garment status 102, which not necessarily needs to be an increment of a numeric value, accordingly.

According to a preferred embodiment the person interface 30 comprises a controllable gate so that access to the garment dispenser 10 can be automatically enforced under control of the inventory module 70. The inventory module 70 then controls the controllable gate of the person interface 30 such that it only allows access to the garment dispenser 10 if the garment status 102 of the garments 20 detected by the garment detector 32 of the person interface 30 corresponds to the predetermined replaceable garment status 104. This means for example that when person Y with garment G in its personal garment inventory 76 has an associated garment status 102 of "45" shown in Figure 3, that person will not be allowed access to the garment dispenser 10 as the controllable gate of the person interface 30 will not be allowed to open by the inventory module 70 because "45" is not in the range of values "60 - 100" of the predetermined replaceable garment status 104. When that same garment G of person Y, after accessing the task area 90, receives a garment status 102 of "60", as shown in Figure 4, is detected at the person interface 30, its controllable gate will allow access as the value of the garment status 102 now corresponds to a replaceable garment status 104. Additionally the inventory module 70 will only open the controllable gate of the person interface 30 when a suitable replacement is available in the clean garment container inventory 74. This means that, in the example of Figure 4, the controllable gate will only be opened if garments C, D or E present in the clean garment container inventory 74 qualify as suitable replacement garments for garment G when it is detected at the person interface 30. Alternatively the controllable gate of the person interface 30 could also prevent the person from exiting the garment dispenser 10 when it is determined that the person has collected garments which do not qualify as suitable replacement garments for that person, because that person has reached a predetermined maximum of such replacement garments he is allowed to collect from the garment dispenser or because the collected garments do not have a suitable garment status 102 for the task that needs to be performed by that person.

According to a preferred embodiment also the task interface 80 comprises a controllable gate with which access to the task area 90 can be controlled by the inventory module 70. The inventory module 70 then controls the controllable gate of the task interface 80 such that it prevents access to the task area 90 if the garment status 102 of the garments 20 detected by the garment detector 82 of the task interface 80 corresponds to a predetermined unallowed garment status 108. As shown in Figures 2 and 3 such an unallowed garment status 108 is for example a range of values from 90 to 100, which means that any person wearing a garment 20 with a corresponding garment status 102 with an associated value of 90 or higher will prevented access to the task area 90 and instructed by means of the user interface 110 to collect clean replacement garments at the garment dispenser 10. It is advantageous to determine the predetermined replaceable garment status 104 in function of the predetermined unallowed garment status 108. In the example shown in Figures 3 and 4, where the unallowed garment status is a range of values from 90-100, the predetermined replaceable garment status 104 could be determined as a range that is four times wider and extends the lower limit of these values, thus resulting in the presented range of values from 60-100. It is clear that numerous alternative ways are possible to determine the relationship between the unallowed garment status 108 and the replaceable garment status 104. It will be clear that in this relationship is chosen such that when the garment status 102 is affected by use in the task area first the replaceable garment status 104 is reached and only after further use the unallowed garment status 108 is reached. This two stage approach enables enforcement of for example safety or hygienic requirements for the garments while still retaining sufficient flexibility for the person wearing the garments and while achieving a high throughput of the garment dispenser 10. This is achieved as the number of persons that are forced to replace their current garments as they have reached an unallowable garment status when they present themselves at the task interface 80 will be reduced as already a portion of these persons will have replaced their garments at a more suitable moment in reaction to the instructions issued by the user interface when their garments reached a replaceable garment status 104. This flexibility provided to the persons whether to replace their garments or not when their garment status 102 has reached the replaceable garment status 104 but not the unallowed garment status evens out the load on the garment dispenser 10 as a result of the statistical spreading of when each person assesses it to be the most opportune moment for a visit to the garment dispenser 10. This results less chances of concurrent need for usage of the garment dispenser which results in a higher throughput.

According to still a further embodiment the inventory module 70 determines the predetermined replaceable garment status 104 in function of the predetermined unallowed garment status 108. In the example given in Figures 2 and 3 where the predetermined unallowed garment status 108 is for example set to the range of values of "90 - 100", the relationship with the predetermined replaceable garment status 104 could be expressed as decreasing the lower bound of that range with 30, thus leading to a range of values of "60 - 100". In that case when the predetermined unallowed garment status 108 would be adjusted to a range of values of "85 - 100", the predetermined replaceable garment status 104 would be suitable adjusted by means of this relationship to "55 - 100". It is clear that any other suitable relationship between the predetermined unallowed garment status 108 and the predetermined replaceable garment status 104 could be used, as long as in general during use of the garments 20 in the task area 90 the garment status 102 reaches the predetermined replaceable garment status 104 earlier than the unallowed garment status 108, so that the user is offered a period of flexibility for replacing garments before the garments 20 reach a garment status 102 with which access to the task area is no longer allowed. It is further clear that it is advantageous to choose the replaceable garment status 104 and its relation to the unallowed garment status 108 in such a way that it increases the throughput of the garment dispenser by efficiently limiting the garments that can be returned to garments that have been sufficiently used in the task area 90 by the user as determined by the garment status 102.

According to still a further embodiment the inventory module 70 determines the predetermined replaceable garment status 104 in function of the clean garment inventory 74. This means that in the example shown in Figures 2 and 3, the range of values of "60-100" for the replaceable garment status 104 would be adapted in function of the clean garment container inventory 74. The lower bound of this range could for example be lifted when it is detected from the clean garment container inventory 74 that there is a reduced amount of clean replacement garments 20 available in the clean garment containers 14 of the garment dispenser 10. Or otherwise when there is detected from the clean garment inventory 74 that there is an increased amount of clean replacement garments 20 available in the clean garment containers 14 of the garment dispenser 10, for example when cleaned garments 20 have arrived from the cleaning facility, the lower bound of the range of values for the replaceable garment status 104 could be lowered. Another example of adapting the replaceable garment status 104 in function of the clean garment container inventory 74 could be realised by adapting the replaceable garment status 104 in such a way that the number of garments in the personal garment inventory 76 of the persons 40 with a garment status 102 qualifying as a replaceable garment status 104 is a predetermined ratio of the number of clean replacement garments 20 listed in the clean garment inventory 74. This could for example mean that the predetermined replaceable garment status 104 is adjusted such that the number of garments in the personal garment inventory 76 with such a garment status, corresponds to the number of suitable replacement garments 20 in the clean garment container inventory 74, or is a predetermined share of that number. In a particularly simple example, where a corresponding number is desired, when for example the current range of values for the predetermined replaceable garment status 104 results in for example 250 garments in the personal garment inventory 76 that are sufficiently used for allowing replacement, but it is detected that only 200 suitable replacement garments 20 are available in the clean garment inventory 74, this could result in an automatic reduction of the range of values for the predetermined replaceable garment status 104 until the number of corresponding garments in the personal garment inventory 76 is reduced to 200. According to alternative examples a suitable relationship could be defined for governing this adaption of the predetermined replaceable garment status 104, such as for example requiring that the number of suitable replacement garments in the clean garment inventory 74 is 10% or 20% higher than the number of garments in the personal garment inventory 76 with such a garment status 102.

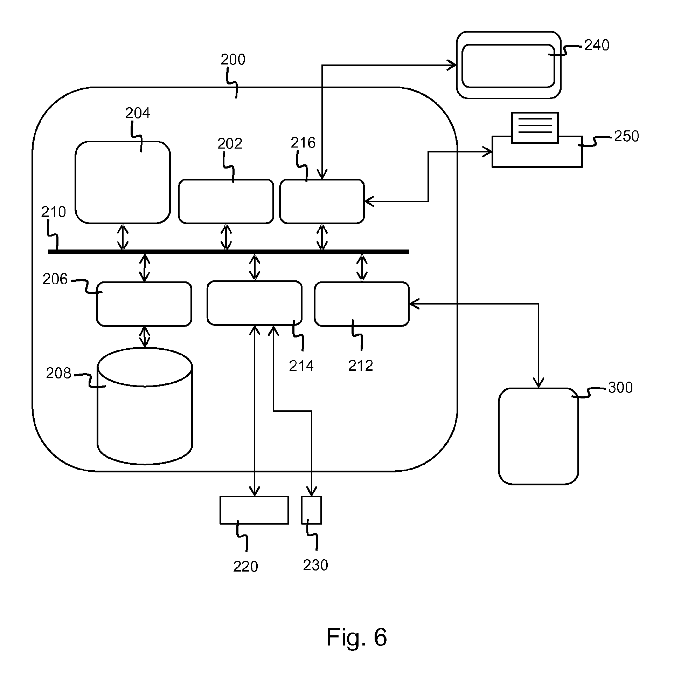

Figure 6 shows a suitable computing system 200, 300 for hosting the inventory module 70, the inventory status controller 100 and/or cleaning module 60 of Figure 1. Computing system 200 may in general be formed as a suitable general purpose computer and comprise a bus 210, a processor 202, a local memory 204, one or more optional input interfaces 214, one or more optional output interfaces 216, a communication interface 212, a storage element interface 206 and one or more storage elements 208. Bus 210 may comprise one or more conductors that permit communication among the components of the computing system. Processor 202 may include any type of conventional processor or microprocessor that interprets and executes programming instructions. Local memory 204 may include a random access memory (RAM) or another type of dynamic storage device that stores information and instructions for execution by processor 202 and/or a read only memory (ROM) or another type of static storage device that stores static information and instructions for use by processor 202. Input interface 214 may comprise one or more conventional mechanisms that permit an operator to input information to the computing device 200, such as a keyboard 220, a mouse 230, a pen, voice recognition and/or biometric mechanisms, etc. Output interface 216 may comprise one or more conventional mechanisms that output information to the operator, such as a display 240, a printer 250, a speaker, etc. Communication interface 212 may comprise any transceiver-like mechanism such as for example two 1Gb Ethernet interfaces that enables computing system 200 to communicate with other devices and/or systems, for example mechanisms for communicating with one or more other computing systems 300. The communication interface 212 of computing system 200 may be connected to such another computing system by means of a local area network (LAN) or a wide area network (WAN, such as for example the internet, in which case the other computing system 300 may for example comprise a suitable web server. Storage element interface 206 may comprise a storage interface such as for example a Serial Advanced Technology Attachment (SATA) interface or a Small Computer System Interface (SCSI) for connecting bus 210 to one or more storage elements 208, such as one or more local disks, for example 1TB SATA disk drives, and control the reading and writing of data to and/or from these storage elements 208. Although the storage elements 208 above is described as a local disk, in general any other suitable computer-readable media such as a removable magnetic disk, optical storage media such as a CD or DVD, -ROM disk, solid state drives, flash memory cards, ... could be used.

The components of the garment dispenser assembly 1, such as the inventory module 70, the inventory status controller 100, cleaning module 64, etc. can be implemented as programming instructions stored in the local memory 204 of the computing system 200 for execution by its processor 202. Alternatively these components could be stored on the storage element 208 or be accessible from another computing system 300 through the communication interface 212. The same holds for the dirty garment inventory 72, clean garment inventory 74, personal garment inventory 76, cleaning inventory 66, etc, which could also be suitably accessible for processing from the local memory 204, the storage element 208 or another computing system 300, for example comprising a suitable database system.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A garment dispenser assembly (1), comprising:
- at least one garment dispenser (10) configured to dispense garments (20) comprising a wireless tag (24) with a garment identifier (22) identifying each garment (20), the garment dispenser (10) comprising:
- at least one garment container (12, 14), identified by a container identifier (16), for receiving and/or presenting garments (20);
- at least one person interface (30) operable to provide a person (40) identified by a person identifier (42) access to the at least one garment container (12, 14), and comprising a garment detector (32) configured to detect the garment identifier (22) of the garments (20) exchanged with the at least one garment container (12, 14) by this person;
- at least one cleaning interface (50) operable to exchange the at least one garment containers (12, 14) with at least one cleaning facility (60) and comprising a container determinator (52) configured to determine the container identifier (16) of the containers (12, 14) exchanged with the cleaning facility (60);
- an inventory module (70) connected to each garment dispenser (10), and for each garment dispenser (10) configured to:
- store a garment inventory (71) comprising:
- a garment container inventory (72, 74) comprising a correlation between the container identifiers (16) and the garment identifiers (22) of garments (20) present in the respective containers (12, 14);
- a personal garment inventory (76) comprising a correlation between the person identifiers (42) and the garment identifiers (22) of garments (20) in the possession of that person (40);
- adjust the garment container inventory (72, 74) in function of garment identifiers (22) detected by the garment detector (32) of the person interface (30) and container identifiers (16) determined by the container determinator (52) of the cleaning interface (50); and
- adjust the personal garment inventory (76) in function of garment identifiers (22) detected by the garment detector (32) of the person interface (30).

2. A garment dispenser according to claim 1 **characterised in that** the inventory module (70) further comprises an inventory status controller (100) configured to:
- store a garment status (102) associated with each garment identifier (22) stored in the garment inventory (71);
- determine said garment status (102) in function of garment identifiers (22) detected by the garment detector (32) of the person interface (30) and/or container identifiers (16) detected by the container determinator (52) of the cleaning interface (50).

3. A garment dispenser assembly according to claim 2, **characterised in that** the garment dispenser assembly (1) further comprises at least one cleaning module (64), connected to the inventory module (70), and comprising a garment cleaning inventory (66) comprising the garment identifiers (22) of garments (20) present in the respective cleaning facility (60) for being subjected to a cleaning operation affecting the garment status (102); and **in that**
the inventory status controller (100) is further configured to determine the garment status (102) in function of the cleaning operation to which the respective garment (20) identified by the garment identifier (22) is subjected at the cleaning facility (60) and store the garment status (102) in the garment inventory (71).

4. A garment dispenser assembly according to claim 2 or 3, **characterised in that**:
- the garment dispenser assembly further comprises at least one task interface (80) operable to provide a person (40) identified by the person identifier (42) access to a task area (90) for performing a task (92) affecting the garment status (102) of the garments worn by that person (40), and comprising a garment detector (82) configured to detect the garment identifiers (22) of the garments (20) worn by that person (40),
- the inventory module (70) is further connected to the at least one task interface (80), and
- the inventory status controller (100) is further configured to determine the garment status (102) for each garment identifier (22) detected by the garment detector (82) of the task interface (80) in function of the task (92) and store the garment status (102) in the garment inventory (71).

5. A garment dispenser assembly according to any of the claims 2 to 4, wherein the garment dispenser assembly (1) further comprises a user interface (110) connected to the inventory module (70); the inventory module (70) being further configured to provide instructions through the user interface (110) in function of the garment inventory (71) and the garment status (102).

6. A garment dispenser assembly according to claim 5, wherein the inventory module (70) is further configured to provide garment replacement instructions through the user interface (110) to the persons (40) associated in the personal garment inventory (76) with the garments (20) of which the garment status (102) corresponds to a predetermined replaceable garment status (104) and for which a replacement is available in the garment container inventory (72, 74).

7. A garment dispenser assembly according to any of the claims 2 to 6, wherein the person interface (30) comprises a controllable gate configured to control access to the garment dispenser (10) under control of the inventory module (70); and the inventory module (70) is further configured to control the controllable gate of the person interface (30) such that it only allows access to the garment dispenser (10) if the garment status (102) of the garments (20) detected by the garment detector (32) of the person interface (30) corresponds to a predetermined replaceable garment status (104) and a replacement is available in the garment container inventory (72, 74).

8. A garment dispenser assembly according to claim 7, wherein the task interface (80) comprises a controllable gate configured to control access to the access to the task area (90) under control of the inventory module (70); and the inventory module (70) is further configured to control the controllable gate of the task interface (80) such that it prevents access to the task area (90) if the garment status (102) of the garments (20) detected by the garment detector (82) of the task interface (80) corresponds to a predetermined unallowed garment status (108).

9. A garment dispenser assembly according to claim 8, **characterised in that** the inventory module (70) is configured to determine the predetermined replaceable garment status (104) in function of the predetermined unallowed garment status (108).

10. A garment dispenser assembly according to claim 9, **characterised in that** the inventory module (70) is further configured to determine the predetermined replaceable garment status (104) in function of the garment container inventory (72, 74).

11. A garment dispenser assembly according to any of the preceding claims, **characterised in that** the inventory module (70) is further configured to:
- determine the garments (20) disposed in the at least one garment container (12) by the person by determining the garments (20) of which the garment identifiers (22) are detected by the garment detector (32) of the person interface (30) when the person (40) enters the garment dispenser (10) through the person interface (30) and are no longer present when the person (40) exits it through the person interface (30);
- add these garment identifiers (22) to the respective garment container inventory (72);
- remove these garment identifiers (22) from the personal garment inventory (76) of that person (40).

12. A garment dispenser assembly according to any of the preceding claims, **characterised in that** the inventory module (70) is further configured to:
- determine the garments (20) taken from the at least one garment container (14) by the person by determining the garments (20) of which the garment identifiers (22) are detected by the garment detector (32) of the person interface (30) when the person (40) exits the garment dispenser (10) through the person interface (30) and were not yet present when the person (40) entered it through the person interface (30);
- remove these garment identifiers (22) from the respective garment container inventory (74);
- add these garment identifiers (22) to the personal garment inventory (76) of that person (40).

13. A garment dispenser assembly according to any of the preceding claims, **characterised in that** the container determinator (52) comprises a container detector configured to detect the container identifier (16) of the garment containers (12, 14) exchanged with the cleaning facility (60).

14. A garment dispenser assembly according to any of the preceding claims, **characterised in that** the wireless tag (24) is an RFID tag, preferably a UHF RFID tag, for example an EPCglobal UHF Class 1 generation 2 Generation 2 compliant RFID tag.

15. A method of operating a garment dispenser assembly according to any of the preceding claims, **characterised in that** the method comprises the inventory module (70) performing the steps of:
- storing a garment inventory (71) comprising:
- a garment container inventory (72, 74) comprising a correlation between the container identifiers (16) and the garment identifiers (22) of garments (20) present in the respective containers (12, 14);
- a personal garment inventory (76) comprising a correlation between the person identifiers (42) and the garment identifiers (22) of garments (20) in the possession of that person (40);
- adjusting the garment container inventory (72, 74) in function of garment identifiers (22) detected by the garment detector (32) of the person interface (30) and container identifiers (16) determined by the container determinator (52) of the cleaning interface (50); and
- adjusting the personal garment inventory (76) in function of garment identifiers (22) detected by the garment detector (32) of the person interface (30).
